# FASCICULE DE BREVET EUROPEEN

(11) **EP 3 391 039 B1**
(45) Date de publication et mention de la délivrance du brevet: **15.02.2023**
(21) Numéro de dépôt: 16822965.6
(22) Date de dépôt: 19.12.2016
(51) Int. Cl.: G01N 29/04, G01N 29/22, G01N 29/24, G01N 29/265

(54) **DISPOSITIF DE CONTROLE ET DE MESURE DE DEFAUTS DE SOUDURE D'UNE PAROI CYLINDRIQUE ET PROCEDE QUI EN FAIT USAGE**
VORRICHTUNG ZUR STEUERUNG UND MESSUNG VON SCHWEISSDEFEKTEN AUF EINER ZYLINDRISCHEN WAND UND VERFAHREN ZUR IMPLEMENTIERUNG DAFÜR
DEVICE FOR CONTROLLING AND MEASURING WELDING DEFECTS ON A CYLINDRICAL WALL AND METHOD IMPLEMENTING SAME

(30) Priorité: 18.12.2015 FR 1562722
(43) Date de publication de la demande: 24.10.2018
(73) Titulaire: Electricité de France, 75008 Paris (FR); Commissariat à l'Énergie Atomique et aux Énergies Alternatives, 75015 Paris (FR)
(72) Inventeur: RUPIN, Fabienne, 77860 Couilly Pont Aux Dames (FR); RIBAY, Guillemette, 92340 Bourg La Reine (FR)
(74) Mandataire: Regimbeau
(86) Numéro de dépôt international: PCT/EP2016/081695
(87) Numéro de publication internationale: WO 2017/103253

(56) Documents cités:
- EP-A1- 1 850 127
- WO-A1-81/02636
- JP-A- 2007 114 075
- JP-A- 2014 185 895
- US-A- 5 913 243
- J Poguet: "Enhanced resolution transducers for thick pieces ultrasonic inspection : the FERMAT transducer concept", NDT.net, vol. 7, no. 05 1 mai 2002 (2002-05-01), XP055295231, Extrait de l'Internet: URL:http://www.ndt.net/article/v07n05/baro n/baron.htm [extrait le 2016-08-12] cité dans la demande

## Description

### DOMAINE DE L'INVENTION

La présente invention se rapporte à un dispositif de mesure de défauts de soudure et à un procédé qui le met en oeuvre.

### ARRIERE PLAN TECHNOLOGIQUE DE L'INVENTION

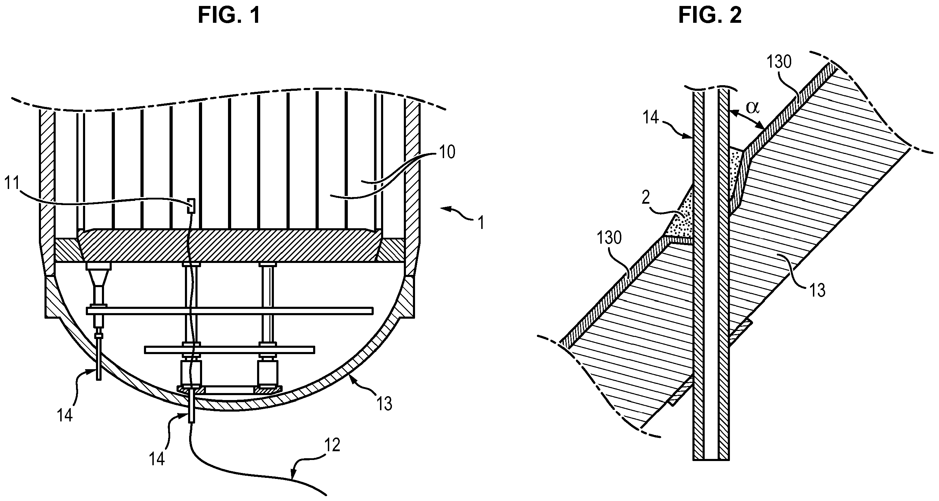

L'exploitation d'un réacteur nucléaire 1, tel que celui représenté à la figure 1 annexée, nécessite la mesure du flux neutronique le long de la dimension axiale des assemblages combustibles 10.

Pour la grande majorité des réacteurs en exploitation, l'instrumentation prévu à cet effet utilise des sondes 11 tractées par des flexibles 12 qui pénètrent par le fond hémisphérique 13 de la cuve du réacteur 1, appelé "fond de cuve", via un passage appelé "Pénétration de Fond de Cuve" (ou PFC) 14, dont une représentation détaillée est faite en figure 2.

Ces PFC sont soudées au voile intérieur du fond de cuve 14. Typiquement, un réacteur du palier 900Mwe du parc nucléaire français comporte une cinquantaine de PFC. Une fuite au niveau d'une PFC, en raison notamment d'un défaut de soudure 2, constituerait une brèche du circuit primaire du réacteur. Ainsi, la qualité des soudures des tubes est garante du bon maintien des tubes en position verticale, et aussi de l'étanchéité de la cuve.

Encore faut-il s'assurer d'avoir à disposition une méthode de mesure qualitative de l'endommagement des soudures 2.

Or, la résolution de ce problème technique est accrue en raison de la difficile accessibilité due à l'emplacement des tubes -en fond de cuve- et aussi en raison de la topologie au voisinage des soudures. En effet, comme le montre la figure, le fond de cuve est principalement plat mais s'incurve au voisinage de sa périphérie, de sorte que le plan de cuve n'est pas toujours dans un plan orthogonal aux tubes positionnés verticalement, dans la direction des assemblages combustibles.

Comme le montre la figure 2, les forts rayons de courbure du fond de cuve sont donc à l'origine de soudures 2 de formes asymétriques autour du tube soudé. Cette asymétrie est corrélée à l'angle α formé par l'axe du PFC et le plan tangent au voile intérieur 130 du fond 13. Cet angle peut par exemple varier de 45 °à 5 ° environ, dès lors que l'on se déplace des extrémités du fond de cuve 130 vers son centre, respectivement.

Des sondes pour le contrôle des PFC existent via des dispositifs avec un accès par l'extérieur des tubes. Or, la zone inspectée par cette famille de sondes est limitée à la partie courante des tubes, et ne permet pas d'inspecter tout type de défaut dans toutes les PFC.

Des sondes dites "TOFD" (pour "Time of Flight Diffraction") pour le contrôle par l'intérieur de tubes existent et fonctionnent en exploitant la génération et les mesures d'ondes acoustiques.

La méthode utilisant ces sondes consiste à contrôler une soudure en utilisant deux "traducteurs acoustiques" positionnés de part et d'autre de la soudure. Si une discontinuité est présente dans la soudure, celle-ci va diffracter une partie de l'énergie suivant les lois habituelles de l'acoustique. C'est cette énergie diffractée qui va être récupérée par le traducteur de réception et qui va servir à localiser la discontinuité par la mesure du "temps de vol".

Par ailleurs, des sondes de type "traducteur d'angle" existent également pour le contrôle de ces tubes depuis l'intérieur. Dans ce dispositif, un unique capteur est utilisé à la fois en émission et en réception. Il est placé sur un sabot qui permet de dévier le faisceau suivant une unique direction, selon les lois de l'acoustique (Loi de Snell Descartes).

Un capteur permet alors la détection des défauts qui ont une orientation permettant le retour de l'énergie acoustique vers le capteur, étant donné l'unique direction du faisceau ainsi émis.

Ces deux types de sondes ('TOFD' et 'traducteur d'angle') sont disponibles commercialement pour le contrôle par l'intérieur des tubes de PFC, par exemple auprès de la société Inetec.

On les retrouve également dans la littérature récente pour le contrôle des pénétrations de fond de cuve (Joon Soo Park, et al, 'Development of Automated Nondestructive Inspection System for BMI Nozzles in Nuclear Vessel', Journal of the Korean Society for Nondestructive Testing, Vol. 33, No. 1: 26-33, 2013).

Les inconvénients que présentent ces deux types de sondes (traducteur d'angle ou sonde TOFD) résident dans le fait qu'ils ne permettent d'envoyer un faisceau d'ondes ultrasonores qu'en une seule zone et une seule direction dans la soudure, qui sont imposées par les dimensions desdites sondes.

Par exemple, pour la sonde TOFD, cette zone est imposée de facto par les angles des sabots sur lesquels sont placés les traducteurs ainsi que la distance entre la partie émettrice et la partie réceptrice. De même, pour le 'traducteur d'angle', la direction du faisceau est imposée par l'angle du sabot.

Des solutions "multi-éléments", c'est à dire à plusieurs éléments (de type immersion, ou contact avec sabot souple, ou contact sur sabot rigide) sont également présentes dans l'état de la technique pour un contrôle par l'extérieur de soudure :
- exemple pour le cas 'contact souple' : ' Zone Sensitivity Optimization For The Ultrasonic Inspection Of Complex 3d Geometries Using Civa Software', Bastien Chapuis et al, ICNDE 2013 ;
- exemple pour 'contact sur sabot rigide' : Development And Qualification Of A Procedure For The Mechanized Ultrasonic Examination Of Structural Weld Overlays, V Chardome et al, ICNDE 2013 ;
- exemple pour 'immersion' : Development Of Ultrasonic And Eddy Current Testing techniques For Curved Structures, T. Miura et al, ICNDE 2013.

Mais ces dispositifs ne permettent pas de contrôler la soudure d'une PFC dont l'angle α est faible. En effet, pour la méthode 'sabot souple', l'encombrement ne permet pas aux sabots souples de venir contrôler la zone. Pour la méthode 'immersion' ou `contact sur sabot rigide', il y a à la fois un problème d'encombrement et d'irrégularité de la surface, laquelle varie en trois dimensions, qui empêche le contrôle.

Egalement des solutions multi-éléments de contrôle depuis l'intérieur d'un tube, du type "sabot", sont divulguées dans l'état de la technique, mais caractérisent des dispositifs qui ne permettent pas la mesure de défauts de soudures asymétriques de PFC selon la définition du problème technique posé.

De plus, elles ne permettent la mesure de défauts que pour des composants avec grands diamètres internes (voir par exemple 8th ECNDT, Barcelona, 17-21 June 2002, Jérôme Poguet et al).

En matière de publications de brevets, l'état de la technique en la matière peut être illustré par les documents suivants : JP 2013217770, JP 2011252759 et FR 2 717 578.

En tout état de cause, ces publications antérieures ont les points communs suivants :

Toute méthode et tout appareil de détection qui "travaille" par l'extérieur ne permet pas d'accéder à la zone joint soudé/tube, en particulier pour les rayons de courbure les plus contraignants. C'est notamment le cas des dispositifs décrits dans JP2014185895 et WO81/02636.

Enfin, on décrit dans US5913243 un dispositif conforme au préambule de la revendication 1 annexée.

Les solutions qui permettent une détection par l'intérieur du tube n'abordent pas la question de l'encombrement (quand le tube est de petit diamètre), ni le caractère asymétrique de cette soudure.

La présente invention a pour but de pallier les inconvénients détaillés plus haut et de combler la lacune ci-dessus.

### RESUME DE L'INVENTION

Ainsi, la présente invention se rapporte à un dispositif de contrôle et de mesure de défauts de soudure présents dans une paroi cylindrique telle qu'une paroi de "pénétration de fond de cuve" de réacteur nucléaire selon la revendication 1, dispositif qui comprend une tête de contrôle constituant une sonde qui présente, selon son axe longitudinal (X-X'), une extrémité proximale et une extrémité distale, et dont un premier flanc dit "flanc interne" est pourvu d'au moins un traducteur d'ondes ultrasonores, ladite tête de contrôle comportant un second flanc, dit "flanc externe" opposé au premier flanc, qui présente une surface courbe en forme de fraction de cylindre, d'axe longitudinal parallèle à l'axe longitudinal (X-X') de la tête et dont la convexité est tournée vers l'extérieur, et ledit traducteur d'ondes étant constitué d'une série d'éléments juxtaposés, chaque élément étant à la fois émetteur et récepteur,
caractérisé par le fait que :
ladite série dont la surface est courbe et a la forme d'une fraction de cylindre de même direction que ledit axe longitudinal (X-X') et dont la concavité est tournée vers l'extérieur ;
le plan (P1) qui contient les deux génératrices extrêmes de la fraction de cylindre du second flanc forme avec le plan (P2) qui contient les deux génératrices extrêmes de ladite fraction de cylindre du traducteur d'ondes, un angle aigu β non nul.

Selon des caractéristiques avantageuses et non limitatives de ce dispositif :
- ledit angle β est de l'ordre de 21 ° ;
- lesdits éléments sont disposés les uns derrière les autres, avec un faible espace entre eux ;
- chaque élément est subdivisé en plusieurs sous-éléments répartis selon une matrice bidimensionnelle, de sorte que chaque sous-élément comporte au moins un sous-élément voisin selon une direction longitudinale et au moins un sous-élément voisin selon une direction transversale ;
- le dispositif comporte une perche de manipulation à l'extrémité distale de laquelle ladite tête de contrôle est présente ; et
- le rayon de courbure de la série d'éléments est compris entre 8 et 30 mm, et préférentiellement de l'ordre de 10 mm.

Par ailleurs, l'invention se rapporte à un procédé de contrôle et de mesure de défauts de soudure présents dans un conduit cylindrique tel qu'une "pénétration de fond de cuve" de réacteur nucléaire selon la revendication 7, procédé qui fait usage d'un dispositif selon l'une des caractéristiques précédentes.

Conformément à l'invention, ce procédé se caractérise par le fait qu'il comprend une étape d'introduction de ladite tête de contrôle à l'intérieur dudit conduit cylindrique, cette tête de contrôle ayant un "flanc externe" qui présente le même rayon de courbure que celui de la paroi interne dudit conduit, une étape d'application dudit flanc externe contre ladite paroi interne, ainsi qu'une étape de balayage d'au moins une partie de ladite paroi interne au cours de laquelle ledit flanc externe reste au contact de ladite paroi interne.

Selon d'autres caractéristiques non limitatives et avantageuses de ce procédé :
- on procède par déplacements longitudinaux successifs de ladite tête à l'intérieur dudit conduit, entre lesquels on procède à un déplacement angulaire de cette tête ; et
- on procède par déplacements angulaires successifs de ladite tête à l'intérieur du conduit, entre lesquels on procède à un déplacement longitudinal de cette tête.

Ainsi, grâce à cette combinaison de caractéristiques, on va pouvoir réaliser un contrôle particulièrement opérant d'une paroi cylindrique de PFC par exemple, par l'intérieur de cette PFC, notamment du fait que la répartition et l'orientation particulières des éléments permet de balayer en une seule fois une très grande gamme d'angles.

Dans l'ensemble de la présente demande, y compris les revendications, on utilisera le terme « traducteur » en lieu et place de « transducteur », mot dérivé lui-même du terme anglais « transducer ».

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1 et la figure 2 représentent, comme annoncé plus haut, l'état de la technique connu du présent demandeur ;
- la figure 3 est une vue simplifiée, en perspective, de la tête de contrôle d'un dispositif conforme à la présente invention, en place dans une PFC à inspecter ;
- la figure 4 est une vue en perspective de la tête de contrôle qui apparait à la figure 3, ici représentée en position renversé à 180° ;
- les figures 5 et 6 sont des vues respectivement de face et de côté de la tête de contrôle de la figure 4, en place dans une PFC ;
- la figure 7 est une vue analogue à la figure 6 d'une variante de réalisation de la tête de contrôle ;
- la figure 8 est une vue de dessous de la tête de la figure 7 ;
- la figure 9 est un schéma destiné à illustrer comment on met en oeuvre le procédé selon l'invention ;
- la figure 10 est un schéma qui montre un appareil pour la mise en oeuvre de ce procédé ;

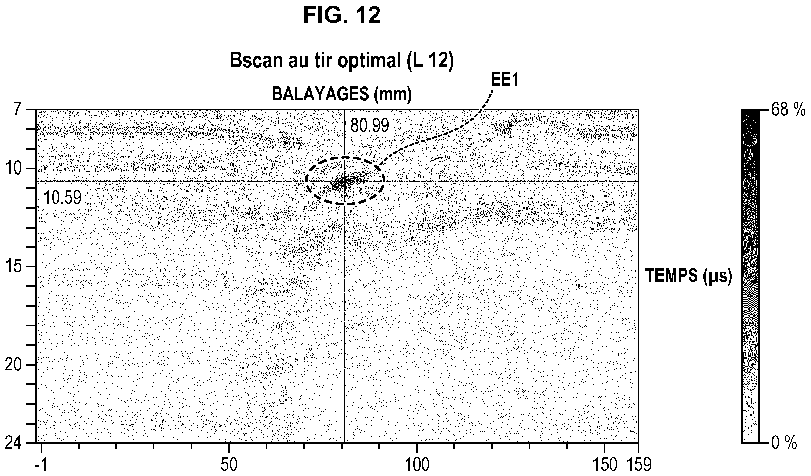

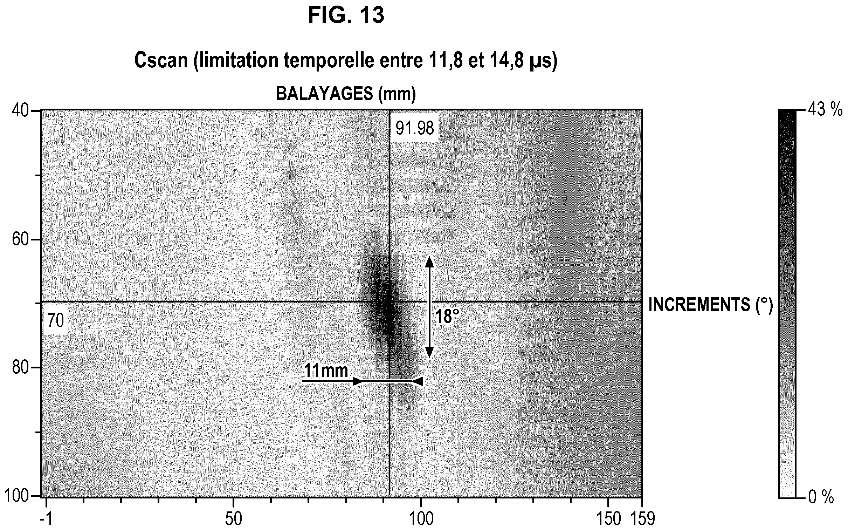

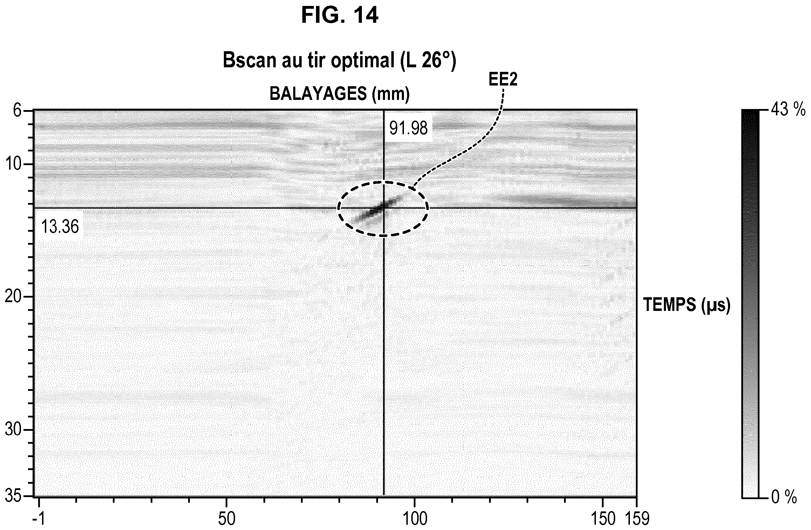

- les figures 11 à 14 sont des images représentant l'amplitude des signaux obtenus à l'aide d'un dispositif selon l'invention.

### DESCRIPTION DETAILLEE DE L'INVENTION

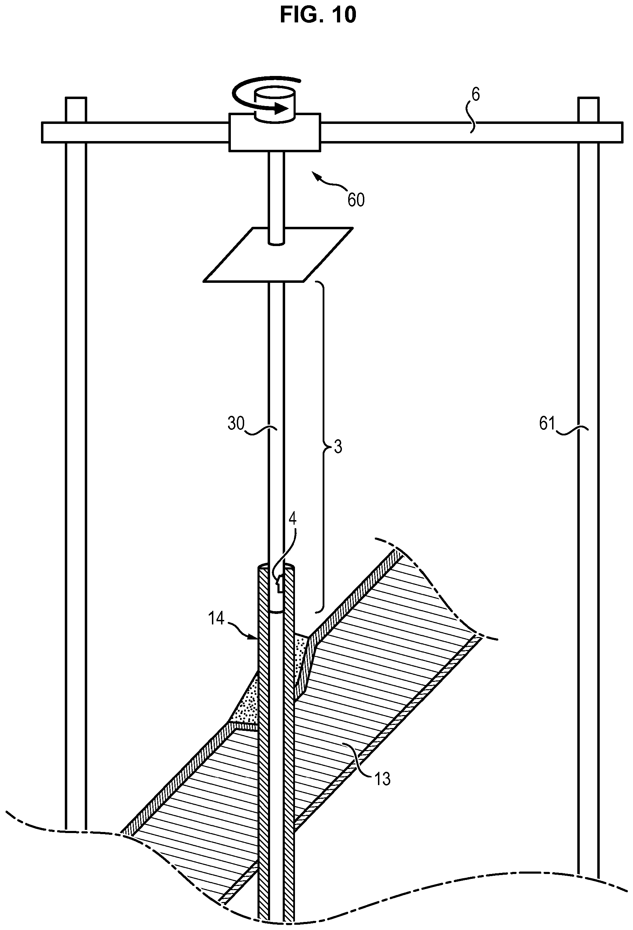

Le dispositif 3 selon l'invention, tel qu'il est représenté schématiquement dans sa globalité à la figure 10 comporte essentiellement une perche 30 à l'extrémité distale de laquelle est présente une tête de contrôle ou sonde 4.

Par convention, on entendra par "extrémité distale" l'extrémité la plus éloignée d'un opérateur qui se situerait du côté de la perche opposé à la tête 4.

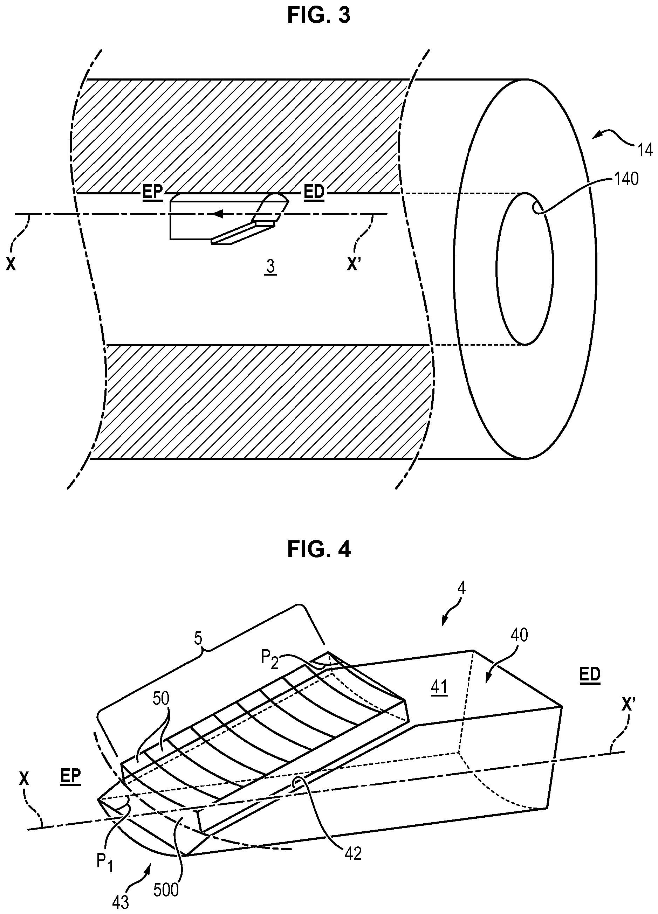

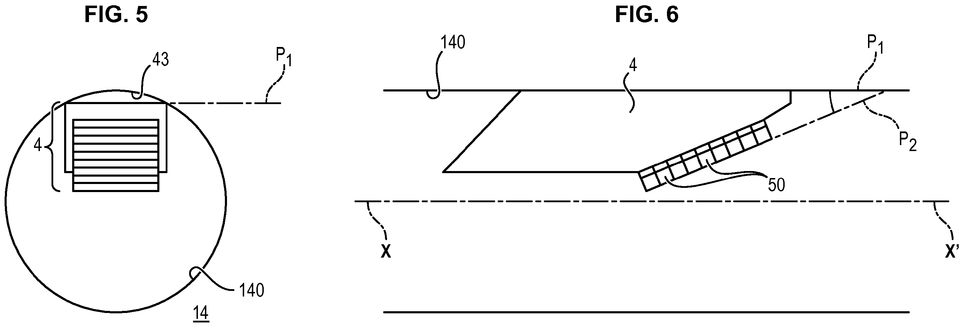

Un exemple de réalisation préférentiel de la tête 4 est représenté aux figures 3 à 6.

On y a référencé X-X' son axe longitudinal et par EP et ED ses extrémités proximale et distale, respectivement. Dans un mode de réalisation non représenté, ces extrémités pourraient être inversées.

Selon l'invention, la tête de contrôle 4, qui est préférentiellement réalisée en une matière plastique électriquement isolante telle que celle connue sous la marque "REXOLITE", comporte un premier flanc dit "flanc interne" 42 et un second flanc 43, dit "flanc externe" opposé au premier flanc.

Ce second flanc 43 présente une surface courbe en forme de fraction de cylindre, d'axe longitudinal parallèle à l'axe longitudinal X-X' de la tête et dont la convexité est tournée vers l'extérieur. On a référencé P1 à la figure 4, le plan qui contient les deux génératrices extrêmes de la fraction de cylindre du second flanc.

Le rayon de courbure de cette surface courbe est, comme on le verra plus loin, égal au rayon de courbure du conduit cylindrique que l'on souhaite inspecter.

Le premier flanc 42 occupe seulement une partie de la surface interne de la tête et se poursuit en direction de l'extrémité proximale EP par une plateforme plane 40.

Le premier flanc 42 reçoit un traducteur d'ondes ultrasonores qui est constitué d'une série 5 d'éléments émetteur/récepteur juxtaposés 50, série dont la surface est courbe et a la forme d'une fraction de cylindre de même direction que l'axe longitudinal X-X' et dont la concavité est tournée vers l'extérieur. On a référencé P2 le plan qui contient les deux génératrices extrêmes de ladite fraction de cylindre de ce traducteur d'ondes. A titre indicatif, le rayon de courbure de la série 5 est compris entre 8 et 30 mm et plus préférentiellement de l'ordre de 10 mm.

Conformément à l'invention, ces deux plans P1 et P2 forment entre eux un angle aigu β non nul.

De manière particulièrement préférée, cet angle est de l'ordre de 21°.

Dans le mode de réalisation des figures 3 et 4, les éléments 5 sont disposés de manière les uns derrière les autres avec un faible espace entre eux.

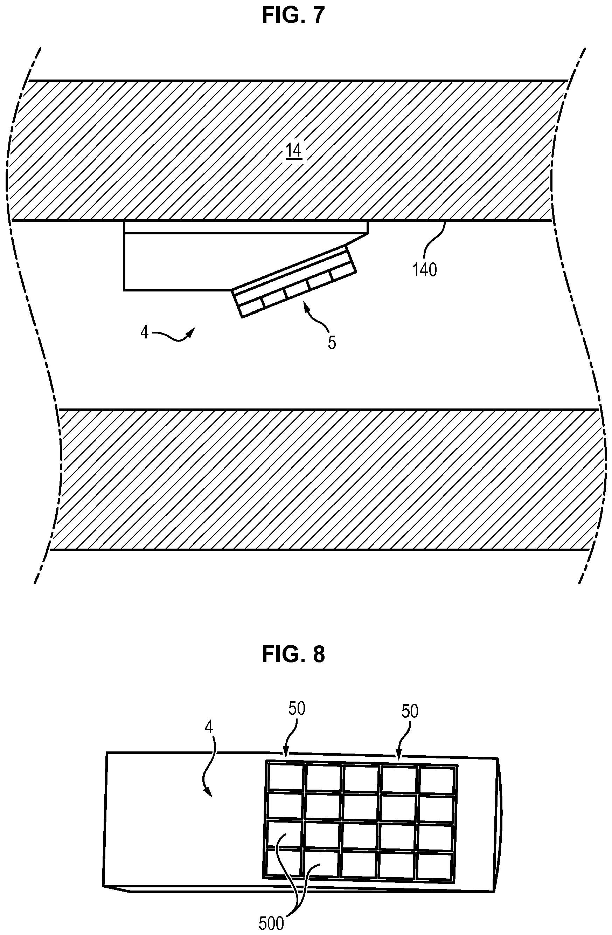

Toutefois et comme montré aux figures 7 et 8, chaque élément 50 peut être subdivisé en plusieurs sous-éléments 501 répartis selon matrice bidimensionnelle, de sorte que chaque sous-élément 501 comporte au moins un sous-élément voisin selon une direction longitudinale et au moins un sous-élément voisin selon une direction transversale.

Ces vues n'ont pour simple vocation d'être illustratives. Ainsi, pour des raisons de simplification, la courbure des éléments 5 n'y a pas été représentée.

En tout état de cause, chaque sous-élément 501 est à la fois émetteur et récepteur.

Conformément au mode de réalisation de la figure 4, au moins huit éléments 50 alignés sont pilotés par une électronique de façon à exciter les éléments à des instants bien choisis en fonction de la forme que l'on souhaite donner au faisceau ultrasonore générés par ces éléments.

L'angle B est d'environ 21° afin de faciliter la couverture de plages d'angles, par exemple de l'ordre de -20°, 70°. Comme on le verra plus loin, l'application de retards à l'excitation des éléments 50 permet déjà une déviation de faisceaux suivants différents angles, mais de manière imparfaite. L'angle B permet de pallier à ce problème.

La fourchette d'angles précitée a pour référentiel la normale de l'axe du tube PFC, l'angle +90° étant dirigé vers le bas, en référence à la figure 2

Les dimensions de la tête 4 (y compris le boitier et le câblage des éléments 5) doivent être inférieures au diamètre interne du tube de PFC. Des brises ondes non représentés sont avantageusement placés en avant (c'est à dire côté extrémité proximale EP) de la tête 4, afin que des échos de rebond survenant à l'intérieur de la tête ne viennent masquer les échos provenant des défauts à contrôler dans la soudure de la PFC.

La fréquence de fonctionnement des éléments 50 est choisie en fonction de la profondeur (relativement au capteur) des défauts que l'on souhaite détecter. Pour des défauts dans la zone soudée d'une PFC, une fréquence de plus ou moins 3MHz est utilisée.

Le contrôle de défauts d'orientation et de position inconnues dans la zone soudée est avantageusement rendu possible par l'automatisation du contrôle.

Ainsi et comme montré à la figure 10, le dispositif 3 selon l'invention qui comprend une perche 30 à l'extrémité distale duquel est présente la tête 4 déplacé en rotation sur lui-même par un moteur 60, lui-même monté sur un rail 6, ce dernier coulissant le long d'un bâti 61. Ainsi, on peut déplacer le dispositif 3 à l'intérieur de la PFC 14, à la fois dans la direction de l'axe de la PFC 14 et en rotation autour de ce même axe.

De plus, pour chaque position de la tête 4, une série de tirs ultrasonores est émise, chaque tir permettant d'illuminer le milieu selon différentes directions. Ainsi, contrairement à l'état de l'art, on peut détecter des défauts d'orientation variable, en ayant recours à un unique ensemble d'éléments 50.

### Mise en oeuvre - exemple de réalisation

Un traducteur piézo-électrique fonctionnant à une fréquence de 3 MHz (bande passante à -6dB de 55% de la fréquence centrale), avec neuf éléments 50 est monté sur une tête telle que celle de la figure 4, avec un angle β de 21°.

Les éléments 50 sont de forme généralement rectangulaire (dimensions 6 mm par 1.15 mm), alignés les uns derrière les autres, avec un espace de 0.15 mm entre deux éléments. La tête 4 est en Rexolite (marque déposée). Des brises-ondes non représentés sont placés à l'avant de la tête 4, c'est à dire du côté de son extrémité proximale. Les éléments piézo-électriques 50 sont usinés pour leur donner une forme courbe avec un rayon de courbure de 10mm.

Dans cet exemple de réalisation, la tête 4 est intégrée à un boitier métallique en forme de cylindre facilitant son guidage et son plaquage contre la paroi interne 140 de la PFC 14.

Lors de la mise en oeuvre, un appareil électronique de marque « M2M » est utilisé pour exciter les éléments 50 piézo-électriques en émission, et pour enregistrer les signaux reçus par ces mêmes éléments 50. L'électronique est pilotée grâce au logiciel dénommé "multi2000".

Ce logiciel calcule les retards temporels à appliquer aux excitations des différents éléments 50 du traducteur, en fonction de la forme que l'on souhaite donner au faisceau ultrasonore émis. Dans ce cas d'application, les retards temporels sont calculés de façon à ce que le faisceau ultrasonore d'ondes longitudinales soit dévié suivant un angle compris entre -20° et 70°, avec un pas de 2°.

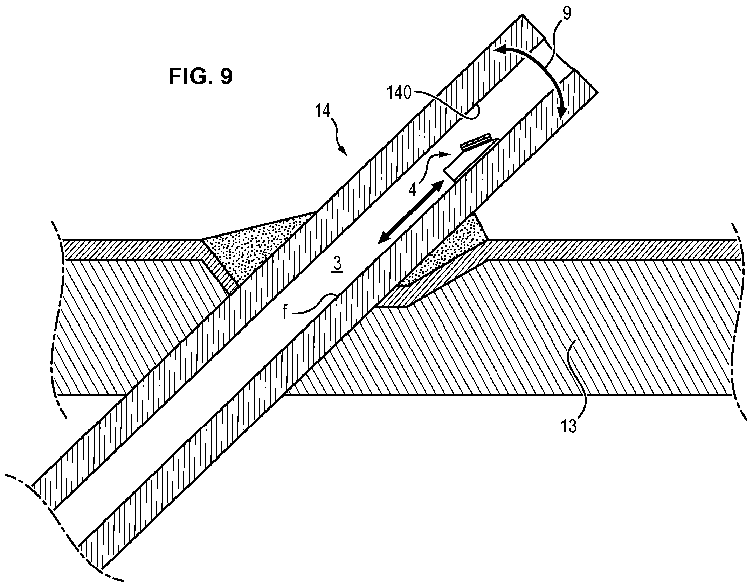

La tête 4 est déplacée suivant l'axe du tube de la PFC 14 (axe dit de 'balayage' comme indiqué par la flèche f de la figure 9). Des signaux sont émis et enregistrés tous les 0.5 millimètres.

La mesure est répétée après rotation successive de la tête 4 autour de l'axe du tube avec un pas de 2° (flèche g de la figure 9). Cela permet de couvrir toute la zone soudée à contrôler.

Le déplacement de la sonde est assuré par un bras motorisé de marque "Micro-contrôle", piloté par un contrôleur de même marque (référence ITL09).

Les signaux mesurés sont ensuite post-traités à l'aide du logiciel "CIVA". Cela permet d'obtenir des images représentant l'amplitude des signaux reçus selon un code de couleur, en fonction soit de la position de la tête 4 suivant l'axe de balayage, soit de la position de la tête 4 suivant la valeur de la rotation, ou encore en fonction du tir ultrasonore appliqué (c'est-à-dire en fonction de l'angle de déviation du faisceau ultrasonore). L'analyse de ces images permet de déduire la présence des défauts présents dans la PFC 14.

Cette procédure est illustrée ci-après.

On considère une maquette représentative en tout point d'une PFC soudée comportant deux défauts artificiels (obtenus par électro-érosion) dits 'circonférentiels' dans la zone soudée.

Il s'agit de défauts dénommés EE1 et EE2. On analyse les données à l'aide d'un logiciel de traitement (ici le logiciel "CIVA"), qui permet de représenter les données sous formes de différents types d'images.

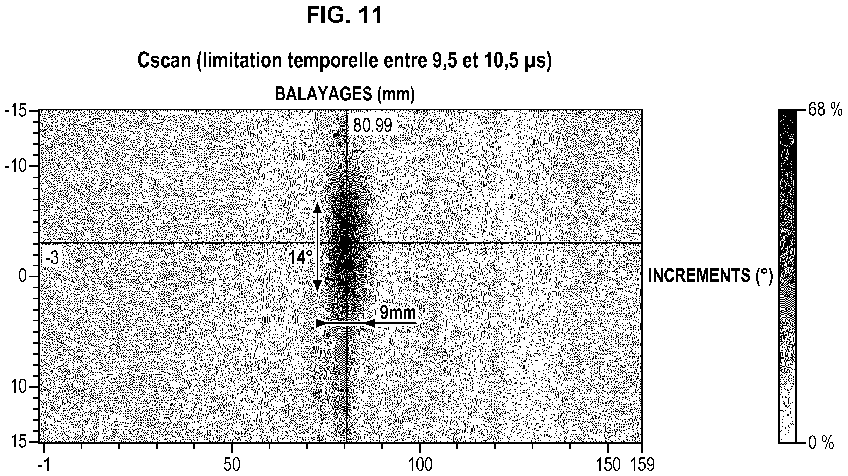

En particulier, on observe les images dites 'C-scan', qui sont une représentation de l'amplitude reçue par le traducteur en code de couleur (variations de teinte grise sur la figure 11 et suivantes) en fonction - verticalement- de la position de la tête 4 en rotation et - horizontalement- en fonction de l'axe de balayage.

Le post-traitement consiste alors à observer les images de type 'C-scan' pour différents angles de tirs ultrasonores, et à rechercher quel est l'angle de tir qui permet d'obtenir une indication d'amplitude maximale provenant d'un défaut.

Plus précisément, on réalise les étapes suivantes à l'aide du logiciel CIVA (mais tout autre logiciel peut être utilisé pour traiter ces données) :
Pour toutes les séquences et tous les tirs, sélection d'une fenêtre temporelle excluant les échos dits 'permanents' dus aux réflexions dans le sabot ;
De même, sélection de la plage de valeurs de balayge (selon l'axe vertical) de la zone correspondant à la soudure (suppression de la zone correspondant au tube seul, par observation des échos de rebond sur le tube lors d'un tir à 0° (i.e. perpendiculaire à l'axe de révolution du tube) ;
Ensuite, observation de l'image de type Cscan (maximum sur le temps de l'amplitude en chaque pas de balayage et d'incrément, le tout pour un tir fixé), et son évolution en fonction du tir choisi. Quand un écho apparait dans la zone soudée sur le Cscan, on observe sur le Bscan la forme de cet écho ;
On sélectionne alors l'incrément correspondant à l'écho observé, et on affiche le Bscan correspondant à ce tir et à cet incrément ;
Pour maximiser le rapport signal sur bruit, on affine si besoin le choix de l'angle de tir en sélectionnant la position de balayage et d'incrément obtenus précédemment, et en observant ensuite l'image dite 'Sscan', qui représente le signal mesuré en fonction du temps et en fonction de l'angle de tir pour le balayage et l'incrément fixés ;
Le choix des limitations temporelles, limitations en balayage, voire même plage d'angles de tir peut également s'appuyer sur la simulation CIVA. Celle-ci permet pour un ensemble de défauts potentiels dans la zone soudée de calculer les temps d'arrivée des échos de ces défauts pour chaque angle de tir, ainsi qu'un ordre de grandeur de leur amplitude. Cela permet d'appuyer l'analyse des signaux expérimentaux.

On peut également mentionner que les échos parasites à l'origine d'une bonne partie du bruit correspondent à des échos de géométrie (rebond sur le fond du tube). Ainsi d'une part la simulation (ou la mesure sur une cale de calibration) permet d'identifier la nature de ces échos lors du contrôle en aveugle d'un nouveau composant de même géométrie, et d'autre part, un traitement d'image (non testé ici) de type filtrage en ondelettes permettrait de supprimer ces échos au profit des seuls échos de défaut.

Cette analyse des données montre que le défaut EE1 est détecté lorsqu'on dévie le faisceau de 12°, et le défaut EE2 est détecté pour une déviation de 26°. Les images ci-dessous montrent l'image 'C-scan' obtenue, ainsi que l'image dite 'Bscan', cette dernière représentant l'amplitude du signal en fonction du temps (axe vertical) et de la position de la tête 4 suivant l'axe de balayage (axe horizontal), la position de rotation étant choisie de sorte que le signal provenant du défaut soit d'amplitude maximale.

Les défauts EE1 et EE2 sont alors bien détectés, grâce à la présence d'un écho (tache foncée sur les images) qui se distingue bien des autres signaux de 'bruit'.

Ainsi, en mettant en oeuvre la méthode qui vient d'être décrite qui procède à un « scan », c'est-à-dire un balayage, de préférence automatisé, de l'ensemble de la surface à inspecter, et à des « multi-tirs », c'est-à-dire des tirs ultrasonores espacés dans le temps, on obtient une qualité optimale du repérage des défauts, même quand le nombre d'éléments 50 de traducteurs est réduit. Ceci vaut notamment quand ce nombre, tel que représenté sur les figures, est égal à neuf.

En effet, moyennant un logiciel de traitement adapté tel que celui cité plus haut, on met en évidence des échos qui auraient été perdus dans le bruit de la structure, sans la visualisation de l'étendue spatiale des échos mesurés.

## Revendications

1. Dispositif (3) de contrôle et de mesure de défauts de soudure présents dans une paroi cylindrique (140) telle qu'une paroi (140) de "pénétration de fond de cuve" (14) de réacteur nucléaire, dispositif qui comprend une tête de contrôle (4) constituant une sonde qui présente, selon son axe longitudinal (X-X'), une extrémité proximale (EP) et une extrémité distale (ED), et dont un premier flanc (42) dit "flanc interne" est pourvu d'au moins un traducteur d'ondes ultrasonores, ladite tête de contrôle (4) comportant un second flanc (43), dit "flanc externe" opposé au premier flanc (42), qui présente une surface courbe en forme de fraction de cylindre, d'axe longitudinal parallèle à l'axe longitudinal (X-X') de la tête (4) et dont la convexité est tournée vers l'extérieur, et ledit traducteur d'ondes étant constitué d'une série (5) d'éléments (50) juxtaposés, chaque élément (50) étant à la fois émetteur et récepteur,
**caractérisé par le fait que**
- ladite série (5) présente une surface courbe et a la forme d'une fraction de cylindre de même direction que ledit axe longitudinal (X-X') et dont la concavité est tournée vers l'extérieur ;
- le plan (P1) qui contient les deux génératrices extrêmes de la fraction de cylindre du second flanc (43) forme avec le plan (P2) qui contient les deux génératrices extrêmes de ladite fraction de cylindre du traducteur d'ondes (5), un angle aigu β non nul.

2. Dispositif selon la revendication 1, **caractérisé par le fait que** ledit angle β est de l'ordre de 21°.

3. Dispositif selon la revendication 1 ou 2, **caractérisé par le fait que** lesdits éléments (50) sont disposés les uns derrière les autres, avec un faible espace entre eux.

4. Dispositif selon la revendication 1 à 3, **caractérisé par le fait que** chaque élément (50) est subdivisé en plusieurs sous-éléments (501) répartis selon une matrice bidimensionnelle, de sorte que chaque sous-élément (501) comporte au moins un sous-élément voisin selon une direction longitudinale et au moins un sous-élément voisin selon une direction transversale.

5. Dispositif selon l'une des revendications précédentes, **caractérisé par le fait qu'**il comporte une perche (30) de manipulation à l'extrémité distale de laquelle ladite tête de contrôle (4) est présente.

6. Dispositif selon l'une des revendications précédentes, **caractérisé par le fait que** le rayon de courbure de la série (5) d'éléments (50) est compris entre 8 et 30 mm, et préférentiellement de l'ordre de 10 mm.

7. Procédé de contrôle et de mesure de défauts de soudure présents dans un conduit cylindrique (140) tel qu'une "pénétration de fond de cuve" (4) de réacteur nucléaire, procédé qui fait usage d'un dispositif (3) selon l'une des revendications précédentes, **caractérisé par le fait qu'**il comprend une étape d'introduction de ladite tête de contrôle (4) à l'intérieur dudit conduit cylindrique (140), cette tête de contrôle (4) ayant un "flanc externe" (43) qui présente le même rayon de courbure que celui de la paroi interne dudit conduit (140), une étape d'application dudit flanc externe (43) contre ladite paroi interne, ainsi qu'une étape de balayage d'au moins une partie de ladite paroi interne au cours de laquelle ledit flanc externe (43) reste au contact de ladite paroi interne.

8. Procédé selon la revendication précédente, **caractérisé par le fait que** l'on procède par déplacements longitudinaux successifs de ladite tête (4) à l'intérieur dudit conduit (140), entre lesquels on procède à un déplacement angulaire de cette tête (4).

9. Procédé selon la revendication 7, **caractérisé par le fait que** l'on procède par déplacements angulaires successifs de ladite tête (4) à l'intérieur du conduit (140), entre lesquels on procède à un déplacement longitudinal de cette tête (4).

## Patentansprüche

1. Verfahren (3) zur Steuerung und Messung von Schweißdefekten, die in einer zylindrischen Wand (140) wie einer Wand (140) einer "Behälterbodeneindringung" (14) eines Kernreaktors vorhanden sind, wobei die Vorrichtung einen Steuerkopf (4) umfasst, der eine Sonde bildet, die entlang ihrer Längsachse (X-X') ein proximales Ende (EP) und ein distales Ende (ED) aufweist und von der eine erste Flanke (42), die sogenannte "innere Flanke", mit mindestens einem Ultraschallwellenwandler versehen ist, wobei der Steuerkopf (4) eine zweite Flanke (43), die sogenannte "äußere Flanke" umfasst, die der ersten Flanke (42) entgegengesetzt ist und eine in der Form eines Zylinderbruchteils gekrümmte Oberfläche mit einer Längsachse aufweist, die parallel zur Längsachse (X-X') des Kopfs (4) ist und deren Konvexität nach außen gewandt ist, und der Wellenwandler aus einer Reihe (5) von nebeneinanderliegenden Elementen (50) besteht, wobei jedes Element (50) zugleich Sender und Empfänger ist,
**dadurch gekennzeichnet, dass**
- die Reihe (5) eine gekrümmte Oberfläche aufweist und die Form eines Zylinderbruchteils mit der gleichen Richtung wie die Längsachse (X-X') aufweist und deren Konkavität nach außen gewandt ist;
- die Ebene (P1), welche die zwei äußersten Erzeugenden des Zylinderbruchteils der zweiten Flanke (43) enthält, mit der Ebene (P2), welche die zwei äußersten Erzeugenden des Zylinderbruchteils des Wellenwandlers (5) enthält, einen spitzen Winkel β von ungleich Null bildet.

2. Vorrichtung nach Anspruch 1, **dadurch gekennzeichnet, dass** der Winkel β in der Größenordnung von 21° liegt.

3. Vorrichtung nach Anspruch 1 oder 2, **dadurch gekennzeichnet, dass** die zwei Elemente (50) mit einem geringen Raum zwischeneinander hintereinander angeordnet sind.

4. Vorrichtung nach Anspruch 1 bis 3, **dadurch gekennzeichnet, dass** jedes Element (50) in mehrere Unterelemente (501) unterteilt ist, die entlang einer zweidimensionalen Matrix verteilt sind, derart dass jedes Unterelement (501) mindestens ein benachbartes Unterelement entlang einer Längsrichtung und mindestens ein benachbartes Unterelement entlang einer Querrichtung umfasst.

5. Vorrichtung nach einem der vorhergehenden Ansprüche, **dadurch gekennzeichnet, dass** sie eine Betätigungsstange (30) umfasst, an deren distalen Ende der Steuerkopf (4) vorhanden ist.

6. Vorrichtung nach einem der vorhergehenden Ansprüche, **dadurch gekennzeichnet, dass** der Krümmungsradius der Reihe (5) von Elementen (50) zwischen 8 und 30 mm beträgt und vorzugsweise in der Größenordnung von 10 mm liegt.

7. Verfahren zur Steuerung und Messung von Schweißdefekten, die in einer zylindrischen Leitung (140) wie einer "Behälterbodeneindringung" (4) eines Kernreaktors vorhanden sind, wobei das Verfahren eine Vorrichtung (3) nach einem der vorhergehenden Ansprüche nutzt, **dadurch gekennzeichnet, dass** es einen Schritt des Einführens des Steuerkopfs (4) in das Innere der zylindrischen Leitung (140), wobei dieser Steuerkopf (4) eine "äußere Flanke" (43) aufweist, die den gleichen Krümmungsradius wie derjenige der Innenwand der Leitung (140) aufweist, einen Schritt des Anlegens der äußeren Flanke (43) gegen die Innenwand sowie einen Schritt des Abtastens mindestens eines Teils der Innenwand umfasst, während dessen die äußere Flanke (43) mit der Innenwand in Kontakt bleibt.

8. Verfahren nach dem vorhergehenden Anspruch, **dadurch gekennzeichnet, dass** in aufeinanderfolgenden Längsverlagerungen des Kopfs (4) im Inneren der Leitung (140) vorgegangen wird, zwischen denen eine Winkelverlagerung dieses Kopfs (4) vorgenommen wird.

9. Verfahren nach Anspruch 7, **dadurch gekennzeichnet, dass** in aufeinanderfolgenden Winkelverlagerungen des Kopfs (4) im Inneren der Leitung (140) vorgegangen wird, zwischen denen eine Längsverlagerung dieses Kopfs (4) vorgenommen wird.

## Claims

1. Device for inspecting and measuring weld defects (3) in a cylindrical wall (140) such as a wall (140) of a "vessel bottom penetration" (14) of a nuclear reactor, the device comprising an inspection head (4) forming a probe having a proximal end (EP) and a distal end (ED) along its longitudinal axis (X-X'), and of which a first side (42) called "inner side" is provided with at least one ultrasound wave transducer, said inspection head (4) comprising a second side (43), called "outer side" opposite the first side (42), that has a curved surface in the form of a cylinder fraction, of longitudinal axis parallel to the longitudinal axis (X-X') of the head (4) and with outward facing convexity and said wave transducer being formed of a series (5) of juxtaposed elements (50), each element (50) being both a transmitter and receiver,
**characterized by** the fact that:
- said series (5) has a curved surface and is in the form of a cylinder fraction of same direction as said longitudinal axis (X-X') and with outward facing concavity;
- the plane (P1) containing the two end generatrixes of the cylinder fraction of the second side (43), together with plane (P2) containing the two end generatrixes of said cylinder fraction of the wave transducer (5), forms a nonzero acute angle β.

2. The device according to claim 1, **characterized by** the fact that said angle β is approximately 21°.

3. The device according to claim 1 or 2, **characterized by** the fact that said elements (50) are arranged one behind the other, with a narrow space between each one.

4. The device according to claims 1 to 3, **characterized by** the fact that each element (50) is subdivided into several sub-elements (501) distributed in a two-dimensional array, so that each sub-element (501) has at least one neighbouring sub-element in a longitudinal direction and at least one neighbouring sub-element in a transverse direction.

5. The device according to one of the preceding claims, **characterized by** the fact that it comprises a manipulating pole (30) having said inspection head (4) at the distal end thereof.

6. The device according to one of the preceding claims, **characterized by** the fact that the radius of curvature of the series (5) of elements (50) is between 8 and 30 mm, and preferably in the region of 10 mm.

7. Method for inspecting and measuring weld defects in a cylindrical conduit (140) such as a "vessel bottom penetration" (4) of a nuclear reactor, the method making use of a device (3) according to one of the preceding claims, **characterized by** the fact that it comprises a step to insert said inspection head (4) inside said cylindrical conduit (140), this inspection head (4) having an "outer side" (43) with the same radius of curvature as the inner wall of said conduit (140), a step to apply said outer side (43) against said inner wall, and a step to scan at least part of said inner wall during which said outer side (43) remains in contact with said inner wall.

8. The method according to the preceding claim, **characterized by** the fact that said head (4) is moved in successive longitudinal movements inside said conduit (140), an angular movement being imparted to this head (4) between each longitudinal movement.

9. The method according to claim 7, **characterized by** the fact that said head (4) is moved in successive angular movements inside the conduit (140), a longitudinal movement being imparted to this head (4) between each angular movement.
